# FASCICULE DE BREVET EUROPEEN

(11) **EP 1 994 679 B1**
(45) Date de publication et mention de la délivrance du brevet: **08.05.2019**
(21) Numéro de dépôt: 07731107.4
(22) Date de dépôt: 07.03.2007
(51) Int. Cl.: H04L 29/06, H04L 12/22, H04B 7/185

(54) **PROCÉDÉS ET DISPOSITIFS D'ÉMISSION ET DE RÉCEPTION D'UN MESSAGE À ECHANGER ENTRE UN AÉRONEF ET UNE BASE AU SOL, ET AÉRONEF ÉQUIPÉ DE TELS DISPOSITIFS**
VERFAHREN UND VORRICHTUNGEN ZUM SENDEN UND EMPFANGEN VON NACHRICHTEN ZWISCHEN EINEM FLUGZEUG UND EINEM BODENSYSTEM, UND DAMIT AUSGESTATTETES FLUGZEUG
METHODS AND DEVICES FOR THE EMISSION AND RECEPTION OF A MESSAGE TO BE EXCHANGED BETWEEN AN AIRCRAFT AND A GROUND BASE, AND AIRCRAFT PROVIDED WITH SUCH DEVICES

(30) Priorité: 08.03.2006 FR 0650804
(43) Date de publication de la demande: 26.11.2008
(73) Titulaire: Airbus Operations, 31060 Toulouse (FR)
(72) Inventeur: LECLERCQ, Agnès, F-31500 Toulouse (FR); COLLE-MORLEC, Cécile, 31860 Labarthe sur Leze (FR)
(74) Mandataire: Santarelli
(86) Numéro de dépôt international: PCT/FR2007/000409
(87) Numéro de publication internationale: WO 2007/101945

(56) Documents cités:
- US-A1- 2002 032 853
- ANONYMOUS: "DRAFT 03 (Strawman) OF AEEC PROJECT PAPER 823. DATALINK SECURITY, PART 3 - ACARS MESSAGE SECURITY" AERONAUTICAL RADIO, INC. ANNAPOLIS, MD, USA, [Online] 21 février 2006 (2006-02-21), XP002407258 Extrait de l'Internet: URL:http://www.arinc.com/aeec/projects/dse c/dsec_handouts_march06.pdf> [extrait le 2006-11-08]
- WARGO C A ET AL: "Security consideratiolis for the e-enabled aircraft" AEROSPACE CONFERENCE, 2003. PROCEEDINGS. 2003 IEEE MARCH 8-15, 2003, PISCATAWAY, NJ, USA,IEEE, vol. 4, 8 mars 2003 (2003-03-08), pages 41533-41550, XP010660380 ISBN: 0-7803-7651-X
- Mike Russo: "Meeting Handout Circulation DataLink Security (DSEC) Subcommittee January 17-19, 2006, Columbia, Maryland", , 1 March 2006 (2006-03-01), pages 1-79, XP055243497, Retrieved from the Internet: URL:https://web.archive.org/web/2006030114 0130/http://www.arinc.com/aeec/projects/ds ec/dsec_handouts_january06.pdf [retrieved on 2016-01-21]
- KENT S ET AL: "Security Architecture for the Internet Protocol; rfc4301.txt", INTERNET ENGINEERING TASK FORCE, IETF, CH, 1 December 2005 (2005-12-01), XP015043220,

## Description

L'invention concerne l'échange de messages entre un aéronef et une base au sol. En particulier, l'invention vise des procédés et des dispositifs d'émission et de réception d'un message à échanger entre un aéronef et une base au sol, et un aéronef équipé de tels dispositifs

Il a déjà été proposé d'échanger des données constituant des messages entre un aéronef et une base au sol, par exemple selon les protocoles ACARS (pour "*Aircraft Communications Addressing and Reporting System*") ou ATN (pour *"Aeronautical Telecommunication Network"*).

Dans ce cadre, on a cherché à sécuriser les échanges entre l'aéronef et la base au sol dans les cas où les informations échangées étaient particulièrement sensibles, comme par exemple en cas d'utilisation des protocoles précités pour l'échange de messages entre l'aéronef et le contrôle aérien (à des fins de sécurité) et/ou pour l'échange de messages entre l'aéronef et la compagnie aérienne (à des fins de confidentialité des informations commerciales). Un système permettant des échanges sécurisés est par exemple décrit dans la demande de brevet US 2003/0030581.

Le document Mike Russo: "Meeting Handout Circulation DataLink Security (DSEC) Subcommittee January 17-19, 2006, Columbia, Maryland", Extrait de l'Internet:URL:https://web.archive.org/web/20060301140130/http://www.arinc.com/ aeec/projects/dsec/dsec_handoutsjanuary06.pdf décrit le estandard AMS (de l'angalis "ACARS Message Security standard") qui comprend des politiques de sécurité.

Le document « WARGO C A Et AL : « Security considérations for the e-enabled aircraft » Proccedings IEEE 2003 , vol.4 » décrit, pour des domaines d'exigences fonctionnelles, des mesures de protection de sécurité à appliquer. En particulier, une entrée dans une base de donnée de politiques de sécurité définit pour un datagramme entrant ou sortant une action à effectuer lors du traitement du datagramme pour appliquer un niveau de sécurité correspondant.

La sécurisation des échanges implique toutefois une complexification des protocoles utilisés (du fait par exemple de la nécessité d'échanger des clés cryptographiques afin de mettre en oeuvre une liaison sécurisée), ce qui implique un coût supérieur de mise en oeuvre pour les communications sécurisées. Un tel surcoût est refacturé par les fournisseurs de service de télécommunications aux compagnies aériennes qui souhaiteraient par conséquent limiter autant que possible le recours à de tels échanges sécurisés.

Le choix par l'émetteur du message d'un niveau de sécurisation particulier de celui-ci est toutefois problématique puisque le récepteur du message ne peut pas valablement considérer un message reçu quel que soit son niveau de sécurisation, au risque par exemple d'accepter comme valide un message reçu sans sécurisation (et donc sans preuve de l'origine) alors qu'il aurait dû s'agir pour l'émetteur d'un message sécurisé.

Afin de répondre à ces problèmes, l'invention propose un procédé d'émission d'un message relatif à un type déterminé d'informations à échanger entre un aéronef et une base au sol tel que défini à la revendication 1.

Ainsi le niveau de sécurisation utilisé peut être déterminé pour chaque type d'informations de manière souple mais organisée au moyen de la table de correspondance.

L'invention propose selon le même concept un procédé de réception d'un message relatif à un type déterminé d'informations à échanger entre un aéronef et une base au sol, tel que défini à la revendication 2.

On vérifie ainsi à la réception que l'échange de données (message) a bien eu lieu avec un niveau de sécurisation compatible avec le niveau prévu dans la table (par exemple égal à celui-ci).

La table de correspondance est par exemple mémorisée dans un dispositif électronique de stockage de l'appareil concerné (émetteur ou récepteur).

On peut prévoir en pratique que l'étape de génération comprend, pour au moins un type de message, l'association d'un niveau de sécurisation à ce type de message dans la table de correspondance en fonction du niveau de sécurisation souhaité associé à ce message dans la table de données et de caractéristiques du système de communication utilisé, ce qui permet de tenir compte à la fois des souhaits précités et des caractéristiques propres à chaque appareil.

L'invention propose également un dispositif d'émission d'un message relatif à un type déterminé d'informations à échanger entre un aéronef et une base au sol tel que défini à la revendication 5.L'invention propose en outre un dispositif de réception d'un message relatif à un type déterminé d'informations à échanger entre un aéronef et une base au sol, tel que défini à la revendication 6.

Ces dispositifs peuvent présenter des caractéristiques optionnelles correspondant à celles évoquées précédemment pour les procédés d'émission et de réception.

Ces dispositifs sont par exemple utilisés dans l'aéronef concerné.

D'autres caractéristiques et avantages de l'invention apparaîtront à la lumière des dessins annexés, dans lesquels :
- la figure 1 représente le contexte général de l'invention ;
- la figure 2 représente un procédé de génération et d'utilisation d'une table conformément aux enseignements de l'invention ;
- la figure 3 représente un exemple de table de données *"compagnie"* telle qu'utilisée par le procédé de la figure 2 ;
- la figure 4 représente un exemple de table de données de travail telle qu'utilisée par le procédé de la figure 2 ;
- la figure 5 représente l'émission d'un message avec utilisation de la table prévue par l'invention ;
- la figure 6 représente la réception d'un message avec utilisation de la table prévue par l'invention.

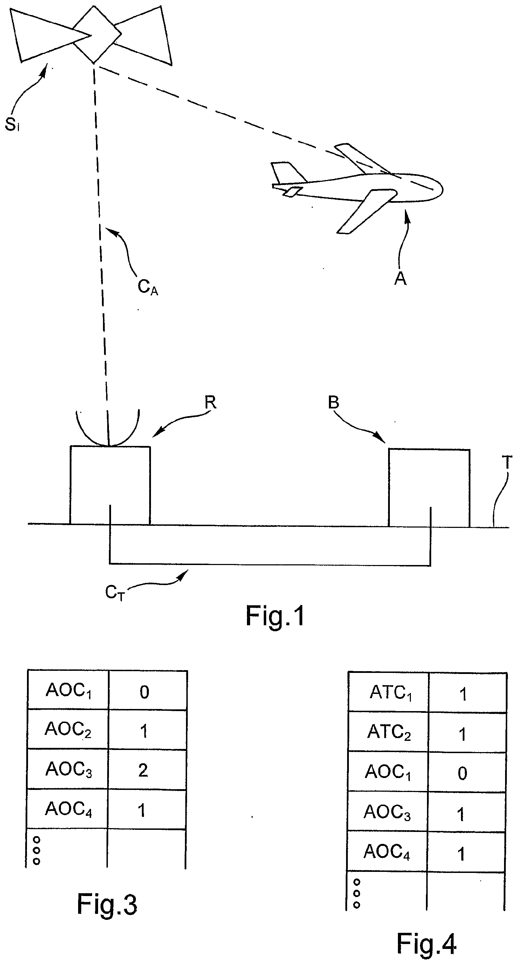

La **figure 1** représente le contexte général dans lequel est mise en oeuvre l'invention.

Une base au sol B communique avec un aéronef A au moyen d'une liaison qui permet l'échange de données sous forme numérique (c'est-à-dire selon le terme anglais *"data link"*) et qui implique notamment une liaison sol-air C_{A}.

La liaison entre la base au sol B et l'aéronef A peut impliquer en outre d'autres dispositifs et liaisons. Par exemple, dans l'exemple présenté en figure 1, la base au sol B communique avec un relais R (également situé au sol T) au moyen d'un réseau de communication terrestre C_{T} ; le relais R transmet les informations à destination et en provenance de l'aéronef A par l'intermédiaire d'un satellite S.

On remarque que l'utilisation d'un relais R est relativement courante du fait que les informations échangées entre la base au sol B et l'aéronef A sont classiquement acheminées par le relais R et le satellite S sous la responsabilité d'un fournisseur de service.

En variante, on pourrait prévoir que les informations soient échangées directement entre l'aéronef A et la base au sol B.

Par ailleurs, on pourrait prévoir d'utiliser des communications radios HF ou VHF au lieu de la communication par satellite.

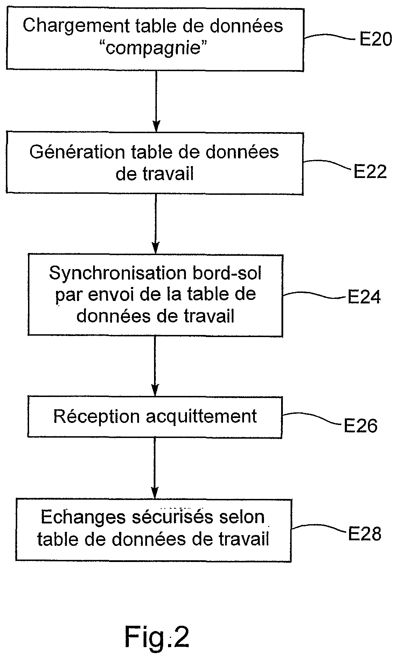

La **figure 2** représente un exemple de mise en oeuvre de l'invention au sein d'un aéronef.

Selon cet exemple, on charge lors d'une étape E20 une table de données dite *"compagnie"* (ou ensemble de données "*Airline*") qui définit, pour chaque type de message à échanger entre l'aéronef et les dispositifs ou membres de la compagnie aérienne, le niveau de sécurisation que la compagnie aérienne souhaite utiliser pour ce type de message.

Dans les exemples donnés dans la suite, on décrira, par souci de simplification, un appareil utilisant deux niveaux de sécurisation, à savoir par exemple l'utilisation d'un protocole de communication non sécurisé ou l'utilisation d'un protocole de communication sécurisé. On mentionnera également (voir par exemple la figure 3), et on pourrait envisager en pratique, un nombre supérieur de niveaux de sécurisation grâce à l'utilisation de différents protocoles de communication sécurisés, se distinguant les uns des autres par exemple par les algorithmes cryptographiques utilisés en leur sein ou la longueur des clés cryptographiques et mises en oeuvre.

Par chargement de table de données à l'étape E20, on entend le stockage d'un dispositif de mémorisation de l'aéronef de cette table de données. Un tel chargement peut être effectué au sol, par exemple périodiquement lors des visites de maintenance de l'appareil, ou plus régulièrement, par exemple avant chaque décollage.

Selon une variante envisageable, on peut remplacer le chargement prévu à l'étape E20 par une étape de réception de la table de données *"compagnie"* dans l'aéronef et depuis la base au sol (ce qui revient au téléchargement de cette table de données "*compagnie*") en préalable à tout échange de message susceptible d'être sécurisé et en préalable en outre à la génération de la table de données de travail envisagée à l'étape E22 et décrite dans la suite.

Comme déjà indiqué, la table de données *"compagnie"* définit le niveau de sécurisation souhaité par la compagnie pour une partie au moins des types de message dont elle est propriétaire (dont les messages dénommés AOC pour "*Airline Operational Control*") : pour chaque type de message AOC₁, AOC₂, AOC₃, AOC₄ (classiquement désigné par un indice et un sous-indice - couramment dénommés "*label*" et "*sous-label*"), la table de données *"compagnie"* donne le niveau de sécurisation souhaité, comme représenté en figure 3.

On remarque que, la table de données *"compagnie"* n'étant pas utilisée directement pour les communications comme indiqué dans la suite, elle peut d'une part être commune à différents types d'appareil (l'adaptation à chaque appareil se faisant à l'étape E22 décrite ci-après) et n'a pas nécessairement le niveau de certification requis pour les données sur lesquels les routeurs des dispositifs de communication travaillent.

En effet, le routeur de l'aéronef utilise une table de données de travail générée au cours d'une étape E22 sur la base de la table de données *"compagnie"* et d'autres informations présentes dans l'aéronef, à savoir par exemple la liste des types de message traités par le dispositif de communication de l'aéronef et les niveaux de sécurisation que ce dispositif peut mettre en oeuvre.

Ainsi, pour chaque type de message (identifié comme précédemment par un indice et un sous-indice), on détermine, en utilisant la table de données *"compagnie"* et si le type de message concerné y est présent, le niveau de sécurisation à utiliser pour les messages de ce type et on mémorise cette information au sein de la table de données de travail, qui constitue donc une table de correspondance entre le type de message et le niveau de sécurisation à adopter pour l'échange de messages de ce type.

Les types de message envisageables peuvent être en général classés en deux ensembles principaux : les messages relatifs au contrôle aérien ou ATC (pour *"Air Traffic Control*") et les messages du ressort des compagnies aériennes déjà mentionnés et dénommés AOC.

On propose ici de procéder comme suit pour l'attribution d'un niveau de sécurisation aux différents types de message envisageables :
- si le type de message (identifié par son indice et son sous-indice, ou "*label*" et "*sous-label"*) concerne des messages ATC, alors on associe à ce type de message (c'est-à-dire par exemple à l'indice et au sous-indice), dans la table de données de travail, le niveau de sécurisation par défaut pour les messages ATC (correspondant par exemple à un protocole sécurisé) ;
- si le type de message correspond à des messages AOC, on recherche dans la table de données *"compagnie"* si un niveau de sécurisation souhaité est défini pour ce type de message et on détermine en outre si ce niveau de sécurisation souhaité peut être mis oeuvre au moyen du dispositif de communication de l'aéronef.

Dans le cas des messages AOC, si la table de données *"compagnie"* donne pour un type de message particulier un niveau de sécurisation réalisable dans le dispositif de communication de l'aéronef, on inscrit dans la table de données de travail ce niveau de sécurisation en regard du type de message concerné (c'est-à-dire de l'indice et du sous-indice repérant ce type de message).

Si au contraire le type de message concerné n'apparaît pas dans la table de données *"compagnie"* ou que le niveau de sécurisation souhaité selon cette table de données *"compagnie"* n'est pas réalisable par le dispositif de communication de l'aéronef, on associe dans la table de données de travail un niveau de sécurisation par défaut à ce type de message.

La solution envisagée ici permettrait d'ailleurs éventuellement de ne stocker dans la table de données *"compagnie"* que les types de message associés à un niveau de sécurisation autre que celui par défaut.

En reprenant l'exemple de tables de données *"compagnie"* de la figure 3, on obtiendrait la table de données de travail représentée à la figure 4 dans un aéronef qui n'utilise que les informations AOC₁, AOC₃ et AOC₄ et dont le dispositif de communication ne peut mettre en oeuvre que des niveaux de sécurisation 0 et 1.

Dans cette table de données de travail représentée à la figure 4, on a ainsi attribué le niveau de sécurisation 1 par défaut aux messages ATC₁ et ATC₂. On a par ailleurs associé aux messages de type AOC₁ et AOC₄ des niveaux de sécurisation (respectivement 0 et 1) conformes à la table de données *"compagnie"* puisque ces niveaux de sécurisation étaient définis dans cette table et réalisables par le dispositif de communication de l'aéronef. Enfin, on a attribué aux messages de type AOC₃ le niveau de sécurisation 1 par défaut, le dispositif de communication de l'aéronef ne permettant pas la mise en oeuvre du niveau de sécurisation 2 défini comme niveau de sécurisation souhaité dans la table de données *"compagnie".*

Selon le premier mode de réalisation envisagé ici, on procède alors dans une étape E24 à l'émission de la table de données de travail à destination de la base au sol, avant tout échange potentiellement sécurisé.

Cette transmission de la table de données de travail permet la connaissance, au niveau du dispositif de communication de la base au sol, du niveau de sécurisation adopté par l'aéronef pour chaque type de message, ce qui permettra comme décrit dans la suite d'assurer des échanges cohérents entre l'aéronef et la base au sol.

Lorsque les dispositifs de communication de la base au sol ont reçu et mémorisé la table de données de travail, ces dispositifs accusent réception de cette table par l'émission d'un acquittement dont la réception par l'aéronef (au cours d'une étape E26) conditionne le début des échanges éventuellement sécurisés à une étape E28.

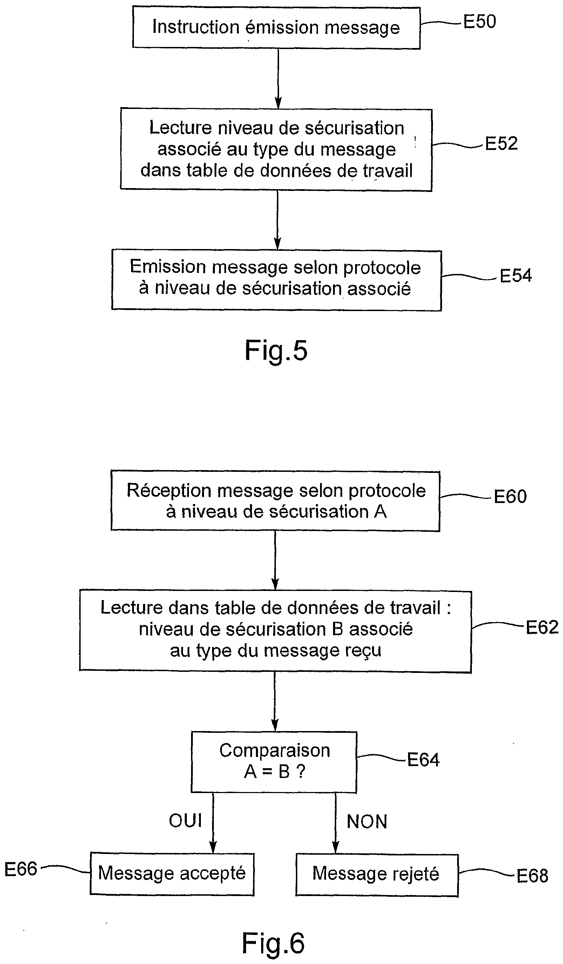

Lors de l'échange d'une information (ou message) entre l'aéronef et la base au sol suite à une instruction d'émission (étape E50 en figure 5), le dispositif émetteur (qu'il s'agisse du dispositif de communication de l'aéronef ou du dispositif de communication de la base au sol) consulte (étape E52) la table de données de travail, commune aux deux dispositifs grâce à l'échange de cette table à l'étape E24 déjà décrite, et détermine le niveau de sécurisation à appliquer au message à envoyer en fonction du type de celui-ci.

Dans l'exemple donné à la **figure 4****,** lorsque l'émission d'un message de type AOC₃ est requis par l'un des dispositifs de communication, la lecture de la table de données indique que le message doit être envoyé avec le niveau de sécurisation 1.

Le dispositif émetteur met alors en oeuvre l'émission du message à envoyer au moyen d'un protocole de communication ayant le niveau de sécurisation requis, comme représenté à l'étape E54.

On remarque que l'on pourrait envisager en variante de ne mémoriser dans la table de données de travail que les types de message associés à un niveau de sécurisation différent d'un niveau par défaut (ce qui réduirait la taille de cette table). A l'émission, on émettrait les messages sans correspondant dans la table avec ce niveau par défaut.

On notera que le dispositif récepteur (qu'il s'agisse du dispositif de communication de la base au sol ou du dispositif de communication de l'aéronef) a connaissance du niveau de sécurisation associé à l'information qu'il reçoit du fait qu'il mémorise également la table de données de travail.

Cette connaissance du niveau de sécurisation du message reçu permet non seulement de faciliter le traitement du message reçu selon le protocole adapté (ce qui pourrait d'ailleurs être réalisé par d'autres méthodes comme l'inclusion dans le message d'un en-tête définissant son niveau de sécurisation), mais en outre de ne tenir compte du message que s'il est transmis par un protocole ayant le niveau de sécurisation associé aux messages de ce type dans la table de données de travail.

On peut ainsi par exemple rejeter les messages reçus au moyen d'un protocole ayant un niveau de sécurisation différent de celui prévu dans la table de données de travail.

Pour ce faire, on procède par exemple aux étapes suivantes côté réception comme indiqué en figure 7 :
- on reçoit le message selon un protocole ayant un certain niveau de sécurisation (étape E60 en figure 6) ;
- on lit dans la table de données de travail le niveau de sécurisation prévu pour les messages du type du message reçu (étape E62) ;
- on compare le niveau de sécurisation du protocole utilisé pour la réception au niveau de sécurisation prévu (étape E64) ;
- on accepte le message (étape E66) seulement en cas d'égalité à l'étape précédente et on refuse le message (étape E68) dans les autres cas.

En variante, on pourrait ne rejeter que les messages dont le niveau de sécurisation est inférieur à celui indiqué dans la table de données de travail.

Selon une variante envisageable pour le mode de réalisation qui vient d'être présenté, on pourrait supprimer l'étape d'échange de la table de données de travail (étape E24 ci-dessus), ce qui nécessite alors la présence préalable de la table de données de travail au sein de chaque entité susceptible de communiquer avec l'aéronef, par exemple par diffusion de cette table (ce qui nécessite au moins le stockage d'une table par type d'appareil) ou la génération de la table au niveau de chaque entité selon un processus du type de celui décrit en référence à l'étape E22 (ce qui implique la connaissance des caractéristiques des différents types d'aéronef au sein de chaque entité).

L'exemple et les variantes qui viennent d'être décrits ne constituent qu'un mode possible de mis en oeuvre de l'invention.

## Revendications

1. Procédé d'émission d'un message relatif à un type déterminé d'informations à échanger entre un aéronef (A) et une base au sol (B), **caractérisé par** les étapes suivantes :
- réception (E20) par l'aéronef d'une table de données définissant pour chaque type de messages prédéterminé un niveau de sécurisation souhaité ;
- génération (E22) d'une table de correspondance à partir de ladite table de données reçue de la base au sol par l'aéronef ;
- émission (E24) de ladite table de correspondance à destination de la base au sol ;
- détermination (E52) d'un niveau de sécurisation associé au type déterminé d'informations au moyen de ladite table de correspondance ;
- émission (E54) du message selon un protocole ayant le niveau de sécurisation déterminé.

2. Procédé de réception d'un message relatif à un type déterminé d'informations à échanger entre un aéronef (A) et une base au soi (B), **caractérisé par** les étapes suivantes :
- réception par la base au sol d'une table de correspondance générée par l'aéronef à partir d'une table de données reçue de la base au sol, ladite table de données définissant pour chaque type de messages prédéterminé un niveau de sécurisation souhaité ;
- réception du message (E60) selon un protocole ayant un premier niveau de sécurisation ;
- détermination (E62) d'un second niveau de sécurisation associé au type déterminé d'informations dans ladite table de correspondance ;
- comparaison (E64) du premier niveau de sécurisation et du second niveau de sécurisation ;
- acceptation (E66) ou rejet (E68) du message selon le résultat de l'étape de comparaison.

3. Procédé selon l'une des revendications 1 ou 2, **caractérisé en ce que** la table de correspondance est mémorisée dans un dispositif électronique de stockage.

4. Procédé selon la revendication 1, **caractérisé en ce que** l'étape de génération (E22) comprend, pour au moins un type de message, l'association d'un niveau de sécurisation à ce type de message dans la table de correspondance en fonction du niveau de sécurisation souhaité associé à ce message dans la table de données et de caractéristiques du système de communication utilisé.

5. Dispositif d'émission d'un message relatif à un type déterminé d'informations à échanger entre un aéronef (A) et une base au sol (B), **caractérisé par** :
- des moyens de réception par l'aéronef d'une table de données définissant pour chaque type de messages prédéterminé un niveau de sécurisation souhaité ;
- des moyens de génération d'une table de correspondance à partir de ladite table de données reçue de la base au sol par l'aéronef ;
- des moyens d'émission de ladite table de correspondance à destination de la base au sol ;
- des moyens de détermination d'un niveau de sécurisation associé au type déterminé d'informations au moyen de ladite table de correspondance ;
- des moyens d'émission du message selon un protocole ayant le niveau de sécurisation déterminé.

6. Dispositif de réception d'un message relatif à un type déterminé d'informations à échanger entre un aéronef (A) et une base au sol (B), **caractérisé par** :
- des moyens d'émission par la base au sol d'une table de données à destination de l'aéronef ;
- des moyens de réception par la base au sol d'une table de correspondance générée à partir de ladite table de données reçue par l'aéronef de la base au sol, ladite table de données définissant pour chaque type de messages prédéterminé un niveau de sécurisation souhaité ;
- des moyens de réception du message selon un protocole ayant un premier niveau de sécurisation ;
- des moyens de détermination d'un second niveau de sécurisation associé au type déterminé d'informations dans ladite table de correspondance ;
- des moyens de comparaison du premier niveau de sécurisation et du second niveau de sécurisation ;
- des moyens de décision quant à une acceptation ou un rejet du message liés aux moyens de comparaison.

7. Dispositif selon la revendication 5 ou la revendication 6, **caractérisé en ce que** la table de correspondance est mémorisée dans un dispositif électronique de stockage.

8. Dispositif selon la revendication 5, **caractérisé en ce que** les moyens de génération comprennent des moyens pour associer, pour au moins un type de message, un niveau de sécurisation à ce type de message dans la table de correspondance en fonction du niveau de sécurisation souhaité associé à ce message dans la table de données et de caractéristiques du système de communication utilisé.

9. Aéronef **caractérisé en ce qu'**il comprend un dispositif selon la revendication 5.

## Patentansprüche

1. Verfahren zum Senden einer Nachricht bezogen auf einen bestimmten Typ von Informationen, die zwischen einem Flugzeug (A) und einer Bodenstation (B) auszutauschen sind, **gekennzeichnet durch** die folgenden Schritte:
- Empfangen (E20), von dem Flugzeug, einer Tabelle mit Daten, die für jeden vorbestimmten Nachrichtentyp ein gewünschtes Sicherungsniveau definiert;
- Erzeugen (E22) einer Entsprechungstabelle auf Grundlage der Tabelle mit Daten, die durch das Flugzeug von der Bodenstation empfangen wird;
- Senden (E24) der Entsprechungstabelle an die Bodenstation;
- Bestimmen (E52) eines Sicherungsniveaus, das mit dem bestimmten Typ von Informationen in Verbindung steht, mittels der Entsprechungstabelle;
- Senden (E54) der Nachricht entsprechend einem Protokoll, welches das bestimmte Sicherungsniveau aufweist.

2. Verfahren zum Empfangen einer Nachricht bezogen auf einen bestimmten Typ von Informationen, die zwischen einem Flugzeug (A) und einer Bodenstation (B) auszutauschen sind, **gekennzeichnet durch** die folgenden Schritte:
- Empfangen, durch die Bodenstation, einer Entsprechungstabelle, die von dem Flugzeug auf Grundlage einer Tabelle mit Daten erzeugt wird, die von der Bodenstation empfangen wird, wobei die Tabelle mit Daten für jeden vorbestimmten Nachrichtentyp ein gewünschtes Sicherungsniveau definiert;
- Empfangen der Nachricht (E60) entsprechend einem Protokoll, das ein erstes Sicherungsniveau aufweist;
- Bestimmen (E62) eines zweiten Sicherungsniveaus, das mit dem bestimmten Typ von Informationen in der Entsprechungstabelle in Verbindung steht;
- Vergleichen (E64) des ersten Sicherungsniveaus und des zweiten Sicherungsniveaus;
- Annehmen (E66) oder Abweisen (E68) der Nachricht entsprechend dem Ergebnis des Schritts des Vergleichens.

3. Verfahren nach einem der Ansprüche 1 oder 2, **dadurch gekennzeichnet, dass** die Entsprechungstabelle in einer elektronischen Speichervorrichtung gespeichert wird.

4. Verfahren nach Anspruch 1, **dadurch gekennzeichnet, dass** der Schritt des Erzeugens (E22) für mindestens einen Nachrichtentyp das Inverbindungbringen eines Sicherungsniveaus mit diesem Nachrichtentyp in der Entsprechungstabelle in Abhängigkeit von dem gewünschten Sicherungsniveau, das in der Tabelle mit Daten mit dieser Nachricht in Verbindung steht, und Merkmalen des genutzten Kommunikationssystems umfasst.

5. Vorrichtung zum Senden einer Nachricht bezogen auf einen bestimmten Typ von Informationen, die zwischen einem Flugzeug (A) und einer Bodenstation (B) auszutauschen sind, **gekennzeichnet durch**:
- Mittel zum Empfangen, durch das Flugzeug, einer Tabelle mit Daten, die für jeden vorbestimmten Nachrichtentyp ein gewünschtes Sicherungsniveau definiert;
- Mittel zum Erzeugen einer Entsprechungstabelle auf Grundlage der Tabelle mit Daten, die durch das Flugzeug von der Bodenstation empfangen wird;
- Mittel zum Senden der Entsprechungstabelle an die Bodenstation;
- Mittel zum Bestimmen eines Sicherungsniveaus, das mit dem bestimmten Typ von Informationen in Verbindung steht, mittels der Entsprechungstabelle;
- Mittel zum Senden der Nachricht entsprechend einem Protokoll, welches das bestimmte Sicherungsniveau aufweist.

6. Vorrichtung zum Empfangen einer Nachricht bezogen auf einen bestimmten Typ von Informationen, die zwischen einem Flugzeug (A) und einer Bodenstation (B) auszutauschen sind, **gekennzeichnet durch**:
- Mittel zum Senden, durch die Bodenstation, einer Tabelle mit Daten an das Flugzeug;
- Mittel zum Empfangen, durch die Bodenstation, einer Entsprechungstabelle, die auf Grundlage der Tabelle mit Daten erzeugt wird, die durch das Flugzeug von der Bodenstation empfangen wird, wobei die Tabelle mit Daten für jeden vorbestimmten Nachrichtentyp ein gewünschtes Sicherungsniveau definiert;
- Mittel zum Empfangen der Nachricht entsprechend einem Protokoll, das ein erstes Sicherungsniveau aufweist;
- Mittel zum Bestimmen eines zweiten Sicherungsniveaus, das mit dem bestimmten Typ von Informationen in der Entsprechungstabelle in Verbindung steht;
- Mittel zum Vergleichen des ersten Sicherungsniveaus und des zweiten Sicherungsniveaus;
- Mittel zur Entscheidung in Bezug auf eine Annahme oder eine Abweisung der Nachricht, die mit den Mitteln zum Vergleichen verbunden sind.

7. Vorrichtung nach Anspruch 5 oder Anspruch 6, **dadurch gekennzeichnet, dass** die Entsprechungstabelle in einer elektronischen Speichervorrichtung gespeichert ist.

8. Vorrichtung nach Anspruch 5, **dadurch gekennzeichnet, dass** die Mittel zum Erzeugen Mittel zum Inverbindungbringen, für mindestens einen Nachrichtentyp, eines Sicherungsniveaus mit diesem Nachrichtentyp in der Entsprechungstabelle in Abhängigkeit von dem gewünschten Sicherungsniveau, das in der Tabelle mit Daten mit dieser Nachricht in Verbindung steht, und Merkmalen des genutzten Kommunikationssystems umfassen.

9. Flugzeug, **dadurch gekennzeichnet, dass** es eine Vorrichtung nach Anspruch 5 umfasst.

## Claims

1. Method for emitting a message relating to a determined type of information to be exchanged between an aircraft (A) and a ground base (B), **characterised by** the following steps:
- reception (E20) by the aircraft of a data table defining for each predetermined type of messages a desired security level;
- generation (E22) of a correspondence table on the basis of said data table received from the ground base by the aircraft;
- emission (E24) of said correspondence table to the ground base;
- determination (E52) of a security level associated with the determined type of information by means of said correspondence table;
- emission (E54) of the message according to a protocol having the security level determined.

2. Method for receiving a message relating to a determined type of information to be exchanged between an aircraft (A) and a ground base (B), **characterised by** the following steps:
- reception by the ground base of a correspondence table generated by the aircraft on the basis of a data table received from the ground base, said data table defining for each predetermined type of messages a desired security level;
- reception of the message (E60) according to a protocol having a first security level;
- determination (E62) of a second security level associated with the determined type of information in said correspondence table;
- comparison (E64) of the first security level and of the second security level;
- acceptance (E66) or rejection (E68) of the message according to the result of the comparison step.

3. Method according to one of claims 1 or 2, **characterised in that** the correspondence table is stored in an electronic storage device.

4. Method according to claim 1, **characterised in that** the generation step (E22) comprises, for at least one type of message, the association of a security level with this type of message in the correspondence table as a function of the desired security level associated with this message in the table of data and of characteristics of the communication system used.

5. Device for emitting a message relating to a determined type of information to be exchanged between an aircraft (A) and a ground base (B), **characterised by**:
- means for receiving by the aircraft a data table defining for each predetermined type of messages a desired security level;
- means for generating a correspondence table on the basis of said data table received from the ground base by the aircraft;
- means for emitting said correspondence table to the ground base;
- means for determining a security level associated with the determined type of information by means of said correspondence table;
- means for emitting the message according to a protocol having the security level determined.

6. Device for receiving a message relating to a determined type of information to be exchanged between an aircraft (A) and a ground base (B), **characterised by**:
- means for emitting by the ground base a data table to the aircraft;
- means for receiving by the ground base a correspondence table generated on the basis of said data table received by the aircraft from the ground base, said data table defining for each predetermined type of messages a desired security level;
- means for receiving the message according to a protocol having a first security level;
- means for determining a second security level associated with the determined type of information in said correspondence table;
- means for comparing the first security level and the second security level;
- means for deciding as regards an acceptance or a rejection of the message which are linked to the comparing means.

7. Device according to claim 5 or claim 6, **characterised in that** the correspondence table is stored in an electronic storage device.

8. Device according to claim 5, **characterised in that** the generation means comprise means for associating, for at least one type of message, a security level with this type of message in the correspondence table as a function of the desired security level associated with this message in the table of data and of characteristics of the communication system used.

9. Aircraft **characterised in that** it comprises a device according to claim 5.
